# EUROPÄISCHE PATENTSCHRIFT

(11) **EP 0 886 071 B1**
(45) Veröffentlichungstag und Bekanntmachung des Hinweises auf die Patenterteilung: **21.11.2001**
(21) Anmeldenummer: 97109907.2
(22) Anmeldetag: 18.06.1997
(51) Int. Cl.: F16B 5/02

(54) **Schraubeinheit**
Screw unit
Ensemble de vis

(43) Veröffentlichungstag der Anmeldung: 23.12.1998
(73) Patentinhaber: Simon, Werner, 42289 Wuppertal (DE)
(72) Erfinder: Simon, Werner, 42289 Wuppertal (DE)
(74) Vertreter: Mentzel, Norbert, Dipl.-Phys.

(56) Entgegenhaltungen:
- EP-B- 0 543 046
- DE-C- 3 304 569
- DE-C- 4 412 431
- US-A- 4 529 244

## Beschreibung

Die Erfindung betrifft eine Schraubeinheit zur ein- und feststellbaren Überbrückung von Distanzen zwischen Bauteilen, Konsolen sowie zur Justierung von Aggregaten u. dgl..

Eine aus der EP 0 543 046 B1 ersichtliche Schraubeinheit besteht aus einem Stellflächen aufweisenden Schraubenzapfen mit einer Zentralbohrung und einer darauf aufgedrehten Schraubenmutter, die als ein Innengewinde aufweisende Stützhülse mit bereichsweise angeordneten Stellflächen ausgebildet ist, in welche der Schraubenzapfen etwa bündig eindrehbar ist, wobei die Stützhülse an ihrem einem Stellkragen des Schraubenzapfens zugekehrten Ende mit einem nach innen vorspringenden, das Innengewinde aufweisenden Ringkragen versehen ist und am freien Ende des Schraubenzapfens ein Anschlagglied als Ausdrehsicherung angeordnet ist. Eine derartige Schraubeinheit lässt sich einerseits zur Abstandshaltung und andererseits zur Nivelierung zwischen zwei Bauteilen einsetzen und kann über einen größeren Verstellweg ein- und nachgestellt werden, ohne dass ein Ausdrehen des Schraubenzapfens aus der Stützhülse möglich ist und außerdem eine genügende Gewindeüberdeckung zur sicheren Stützkraftaufnahme gewährleistet ist. Zur Verbindung der auf Abstand zueinander angeordneten Bauteile, Konsolen od. dgl. durchdringt eine Befestigungsschraube die Schraubeinheit. Dabei ist es erforderlich, dass die Mitten der Befestigungsbohrungen in den Bauteilen zueinander fluchten. Dies ist jedoch in vielen Fällen aufgrund auftretender Fertigungstoleranzen nicht gewährleistet, so dass entweder Verspannungen auftreten können oder Nacharbeiten erförderlich werden.

Aufgabe der Erfindung ist es, eine Schraubeinheit zu schaffen, bei der die Distanzeinstellung bei größeren Verstellwegen zur Abstandshaltung zwischen den Bauteilen weiterhin ermöglicht wird und außerdem eine Anpassung an die Verbindungslage des zwischen den Bauteilen angeordneten Verbindungselementes quer zu dessen Längsachse möglich ist. Diese Aufgabe ist mit den im Patentanspruch 1 genannten Merkmalen gelöst. Dabei lässt sich der das Schiebestützglied der Schraubeinheit fixiert aufnehmende Distanzbauteil mit einer größeren Durchgangsbohrung versehen, so dass bei Mittenabweichungen der Befestigungsbohrungen in den Distanzbauteilen ein Fluchtungsausgleich zwischen der Schraubeinheit und der das Befestigungsglied schließend aufnehmenden Durchgangsbohrung des einen Distanzbauteiles möglich ist. Somit ist gewährleistet, dass die Schraubeinheit nur in ihrer Längsachse wirkende Kräfte aufnehmen muss, während quer dazu gerichtete Kräfte infolge Verspannung quer zur Längsachse des Verbindungsgliedes gar nicht erst auftreten können.

Zur Schaffung eines Haltebereiches für ein Stellglied zur Verschiebung der Schraubeinheit quer zu ihrer Längsachse ohne die Bildung der Ausdrehsicherung zu behindern, weist nach einer vorteilhaften Ausgestaltung des Erfindungsgegenstandes der dem Innengewinde gegenüberliegende Bohrungsbereich der Stützhülse eine nach innen vorragende Abstufung auf, deren lichter Durchmesser etwa mit dem Durchmesser der Zentralbohrung des Schraubenzapfens übereinstimmt, wobei die Abstufung innenseitig wenigstens eine in axialer Richtung verlaufende Aussparung zur Ausgestaltung des die Ausdrehsicherung bildenden Anschlaggliedes aufweist. Dabei ist das die Ausdrehsicherung bildende Anschlagglied vorteilhaft durch bereichsweise Verstemmung des äußeren Gewindeganges am Schraubenzapfen gebildet. Aus Sicherheitsgründen mag es vorteilhaft sein, wenn die Abstufung zwei diametral gegenüberliegende, axiale Aussparungen aufweist, die dem Durchtritt eines Werkzeuges zur Verstemmung des Gewindeganges auf zwei einander gegenüberliegenden Seiten zur Bildung der Ausdrehsicherung dienen mögen.

Obschon die Verschiebung der Schraubeinheit quer zu ihrer Längsachse auf verschiedene Weise bewerkstelligt werden kann, weist nach einer bevorzugten Ausführungsform der Erfindung die am Schiebestützglied anliegende Stützhülse eine in der Abstufung quer zur Längsachse der Stützhülse angeordnete Gewindebohrung auf, in die eine Zylinderschraube eingreift, deren Kopf in einer Nut des Schiebestützgliedes drehbar aber in axialer Richtung unverrückbar gehaltert ist. Dabei mag das Schiebestützglied vorteilhaft plattenförmig gestaltet sein und im mittleren Bereich ein sich mit seiner Hauptachse in Verschieberichtung erstreckendes Langloch aufweisen, dessen Breite mit dem Durchmesser der Zentralbohrung des Schraubenzapfens etwa übereinstimmt und dessen Länge um das Maß des Verschiebeweges länger ist als die Zentralbohrung des Schraubenzapfens. Zur Festlegung des Schiebestützgliedes an dem an diesem anliegenden Bauteil ist das Schiebestützglied mit wenigstens einem Zentrierzapfen versehen, der aus der der Anlageseite für die Stützhülse gegenüberliegenden Seite aus dem Schiebestützglied vorragt und in eine Aufnahme (Loch) des daran anliegenden Bauteiles eingreift. Zur unverrückbaren Abstützung des Kopfes der Zylinderschraube weist das Schiebestützglied einen neben der Gewindebohrung der Stützhülse aufragenden Brückenteil auf, in welchem die den Kopf der Zylinderschraube aufnehmende, quer zur Längsachse der Gewindebohrung verlaufende Nut angeordnet ist. Dabei weist aus Gründen des Einfügens der Zylinderschraube in das Schiebestützglied dieses auf der den Brückenteil aufweisenden Seite einen sich vom Langloch nach außen erstreckenden Schlitz mit einer den Durchtritt des Schaftes der Zylinderschraube ermöglichenden Breite auf.

Schließlich weist zur definierten Verschiebebewegung quer zur Längsachse der Schraubeinheit das Schiebestützglied auf seiner dem Brückenteil gegenüberliegenden Seite einen Führungsschlitz auf, der fluchtend zur Längsachse der Zylinderschraube angeordnet ist und den zylindrischen Kopf einer in die äußere Stirnseite der Abstufung des Schiebestützgliedes eingedrehten Führungsschraube umfasst.

Die Erfindung ist in einem Ausführungsbeispiel auf der Zeichnung dargestellt und wird nachfolgend näher erläutert. Es zeigen;
- Fig. 1: die zwischen zwei Konsolbauteilen angeordnete Schraubeinheit mit einer diese und die beiden Konsolbauteile durchdringenden Befestigungsschraube,
- Fig. 2: die aus Fig. 1 ersichtliche Schraubeinheit in einem analogen Vertikalschnitt jedoch ohne Konsolbauteile und Befestigungsschraube,
- Fig. 3: die aus Fig. 2 ersichtliche Schraubeinheit in einer Draufsicht,
- Fig. 4: die aus Fig. 2 ersichtliche Schraubeinheit in einer Ansicht in Richtung des Pfeiles IV von Fig. 2,
- Fig. 5: die aus Fig. 4 ersichtliche Schraubeinheit in einer Ansicht bei einer um 180° gedrehten Montagelage.

Die aus den Fig. ersichtliche Schraubeneinheit weist eine Stützhülse 10 und einen Schraubenzapfen 11 auf. Die Verbindung zwischen der Stützhülse 10 und dem Schraubenzapfen 11 ist durch ein Gewinde hergestellt, wobei der Schraubenzapfen 11 ein Außengewinde 12 aufweist, das in ein adäquates Innengewinde 13 der Stützhülse 10 eingreift. Der Schraubenzapfen 11 weist an seinem Oberende einen in radialer Richtung gegenüber dem Außendurchmesser der Stützhülse 10 vorspringenden Stellkragen 14 auf, der mit Stellflächen 15 zum Angriff eines Stellwerkzeuges versehen ist. Auch die Stützhülse 10 weist Stellflächen 16 auf, die bei dem dargestellten Ausführungsbeispiel durch einen Sechskantumfang der Stützhülse 10 gebildet sind. Die Stellflächen könnten in jedem Fall als einfache, gegebenenfalls ein Mehrkant bildende Anflachungen ausgebildet sein, können jedoch auch wie dies beim Stellkragen 14 des Schraubenzapfens 11 der Fall ist als sich in axialer Richtung erstreckende, abstandsweise nebeneinander angeordnete Nuten ausgebildet sein. Der Schraubenzapfen 11 ist in seiner axialen Richtung von einer Zentralbohrung 17 durchdrungen auf deren Zweck noch eingegangen wird.

Die Stützhülse 10 weist an ihrem dem Stellkragen 14 des Schraubenzapfens 11 zugekehrten Ende einen radial nach innen vorspringenden, mit dem Innengewinde 13 versehenen Ringkragen 18 auf, der einen Anschlag für ein am freien Ende des Schraubenzapfens 11 angeordnetes Anschlagglied 19 aufweist. Dieses Anschlagglied 19 könnte beispielsweise aus einem in einer Nut am unteren Ende des Schaftes vom Schraubenzapfen 11 festgelegten Sicherungsring gebildet sein. Bei dem dargestellten Ausführungsbeispiel jedoch wird das Anschlagglied 19 durch bereichsweises Verstemmen des äußeren Gewindeganges am Schraubenzapfen gebildet. Am dem Ringkragen 18 gegenüberliegenden Ende der Stützhülse 10 befindet sich eine nach innen vorragende Abstufung 20, deren Innendurchmesser etwa mit dem Durchmesser der Zentralbohrung 17 der Stützhülse 10 übereinstimmt. Ausgehend vom Innendurchmesser der Abstufung 20 erstreckt sich in dieser wenigstens eine in axialer Richtung verlaufende, nutförmige Aussparung 21, durch welche ein Werkzeug zur bereichsweisen Verstemmung 19 des unteren Gewindeganges des Außengewindes 12 des Schraubenzapfens 11 eingeführt werden kann. Quer zur Längsachse der Stützhülse 10 ist in die Abstufung 20 eine Gewindebohrung 22 eingebracht, die der Aufnahme einer Zylinderschraube 23 dient.

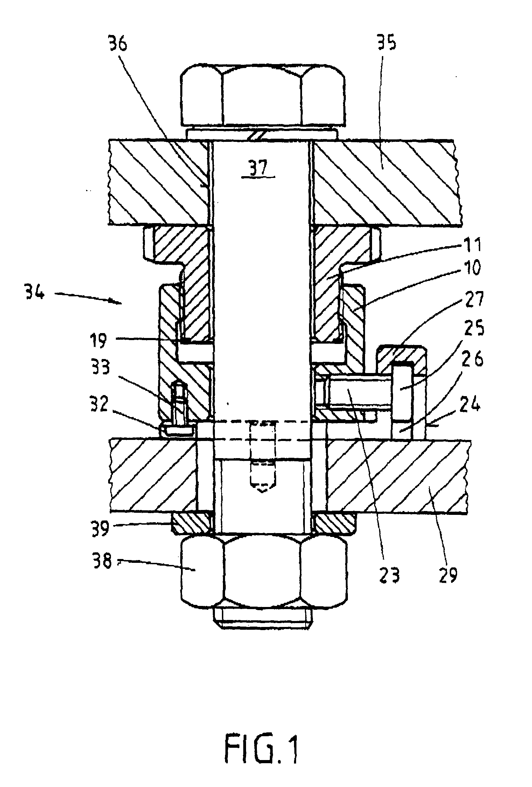

Im Bereich der Abstufung 20 ist die Stützhülse 10 von einem plattenförmigen Schiebestützglied 24 unterfasst, an welchem die Stützhülse 10 anliegt. Die in die Gewindebohrung 22 der Stützhülse eingedrehte Zylinderschraube 23 greift mit ihrem beispielsweise einen Innensechskant aufweisenden, zylindrischen Kopf 25 in eine Nut 26 des Schiebestützgliedes 24 ein, wobei der Kopf 25 in dieser Nut 26 drehbar jedoch in axialer Richtung unverschiebbar gehaltert ist. Zur Anordnung der Nut 26 im Schiebestützglied 24 weist dieses Schiebestützglied einen plattenförmigen Teil auf, der zu einer Seite hin über die Anlagefläche der Stützhülse 10 hinaus verlängert ist, wobei in diesem verlängerten Bereich das Schiebestützglied 24 mit einem aufragenden Brückenteil 27 versehen ist, in welchem die quer zur Längsachse der Gewindebohrung 22 verlaufende Nut 26 angeordnet ist. Bei dem Ausführungsbeispiel ist der plattenförmige Teil sechseckförmig gestaltet. Aus der der Anlageseite zur Abstufung 20 gegenüberliegenden Seite des Schiebestützgliedes 24 ragen zwei einander gegenüberliegende Zentrierzapfen 28 aus dem Schiebestützglied 24 aus und greifen in Löcher eines das Schiebestützglied 24 aufnehmenden Distanzbauteiles 29 ein, wie dies am besten aus Fig. 1 zu entnehmen ist. Das plattenförmige Schiebestützglied 24 weist außerdem in seinem mittleren Bereich ein sich mit seiner Hauptachse in Axialrichtung der Zylinderschraube 23 erstreckendes Langloch 30 auf, dessen Breite mit der Zentralbohrung 17 des Schraubenzapfens 11 übereinstimmt. Das Schiebestützglied 24 weist auf der den Brückenteil 27 aufweisenden Seite einen sich vom Langloch 30 nach außen erstreckenden Schlitz 31 auf, der eine solche Breite aufweist, dass der Schaft der Zylinderschraube 23 von unten her in die Nut 26 des Brückenteiles 27 eingeführt werden kann. Zur Herstellung der aus den Fig. ersichtlichen Montagelage wird dann die Stützhülse 10 der Schraubeinheit 34 auf die Anlageseite des Schiebestützgliedes 24 aufgesetzt und durch Eindrehen der mit ihrem Kopf 25 in der Nut 26 befindlichen Zylinderschraube 23 in die Gewindebohrung 22 in die aus den Fig, ersichtliche Lage quer zur Längsachse der Zentralbohrung 17 der Schraubeinheit verschoben. Dabei versteht es sich, dass die Länge des Langloches 30 um das Maß des gewünschten Verschiebeweges der Stützhülse 10 gegenüber dem Schiebestützglied 24 länger ist als die Zentralbohrung 17 des Schraubenzapfens 11. Um eine einwandfreie Führung der Schiebebewegung der zur Schraubeinheit gehörenden Stützhülse 10 zu gewährleisten, weist das Schiebestützglied 24 auf seiner dem Brückenteil 27 gegenüberliegenden Seite einen T-förmigen Führungsschlitz 32 auf, der fluchtend zur Längsachse der Zylinderschraube 23 angeordnet ist. Dieser Führungsschlitz 32 nimmt den Kopf einer von der äußeren Stirnseite der Abstufung 20 her in die Stützhülse 10 eingedrehten Führungsschraube 33 auf. Diese Führungsschraube 33 ist selbstsichernd, so dass ihr Kopf während der Verschiebebewegung der Stützhülse 10 nicht verdreht werden kann.

Zur Anordnung der Schraubeinheit 34 wird zunächst der Schraubenzapfen 11 in die Stützhülse 10 eingeschraubt. Sodann erfolgt die Anbringung des Anschlaggliedes 19 in der zuvor beschriebenen Weise. Sodann wird die Stützhülse 10 in Verbindung mit dem Schiebestützglied 24 gebracht, wobei die Zylinderschraube 23 in die Gewindebohrung 22 der Stützhülse 10 eingedreht wird, während der *Kopf* 25 der Zylinderschraube 23 in der Nut 26 des Brückenteiles 27 am Schiebestützglied 24 verbleibt. Dabei wird auch die Führungsschraube 33 soweit von der Unterseite der Abstufung 20 an der Stützhülse 10 her in diese eingedreht, dass der Kopf der Führungsschraube 33 in den T-förmigen Führungsschlitz 32 im Schiebestützglied 24 eingreift. Dadurch ist einerseits die Unverlierbarkeit des Schiebestützgliedes 24 an der Stützhülse 10 gewährleistet und außerdem ist die Führungsrichtung der Stützhülse 10 gegenüber dem Schiebestützglied 24 gewährleistet.

Die in dieser Weise zusammengebrachte Schraubeinheit 34 wird dann auf einen Distanzbauteil 29 aufgesetzt, indem die Zentrierzapfen 28 des Schiebestützgliedes 24 in vorbereitete Löcher in dem Distanzbauteil 29 eingreifen. Danach wird der zweite, mit dem Distanzbauteil 29 zu verbindende Konsolbauteil 35 aufgesetzt, wonach zunächst durch Verdrehen des Schraubenzapfens 11 im einen oder anderen Drehsinn die exakte Höhendistanz zwischen Konsolbauteil 35 und Distanzbauteil 29 eingestellt werden mag. Danach lässt sich durch Verdrehen der Zylinderschraube 23 die Schraubeinheit 34 in eine solche Lage verschieben, dass die Zentralbohrung 17 mit der Durchgangsbohrung 36 im Konsolbauteil 35 exakt fluchtet oder das zu justierende Aggregat auch in axialer Richtung fixiert werden kann. Dabei versteht es sich, dass die Bohrung im Distanzbauteil 29 etwas größer als die Zentralbohrung 17 im Schraubenzapfen 11 ausgeführt ist, um eine quer zur Achsrichtung der Zentralbohrung 17 vorzunehmende Anpassung durchführen zu können. Schließlich erfolgt nach der Justierung der Schraubeinheit 34 die Verbindung des Distanzbauteiles 29 mit dem Konsolbauteil 35 durch eine Kopfschraube 37, die mittels einer Mutter 38 und einer zwischengeschalteten Unterlegscheibe 39 den Distanzbauteil 29 gegenüber dem Konsolbauteil 35 verspannen mag.

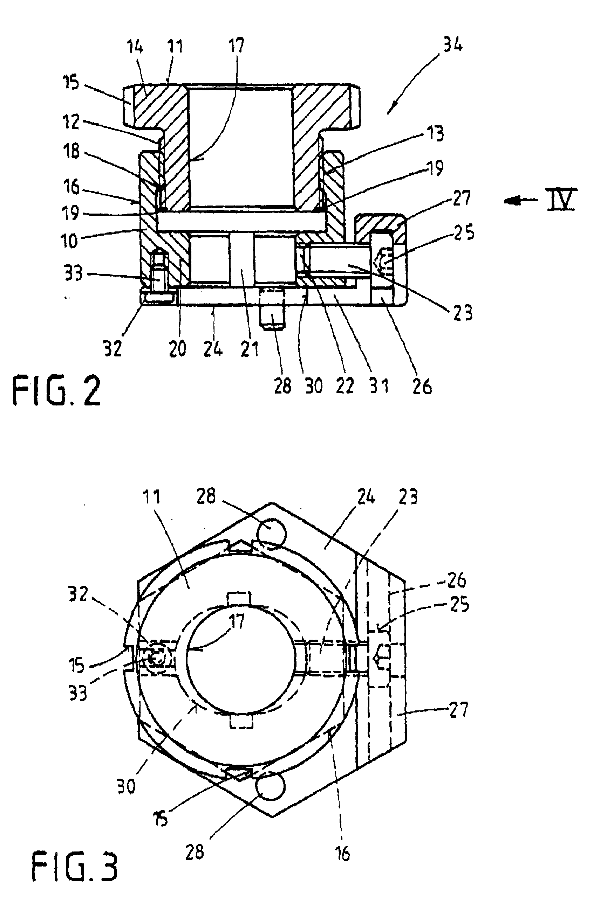

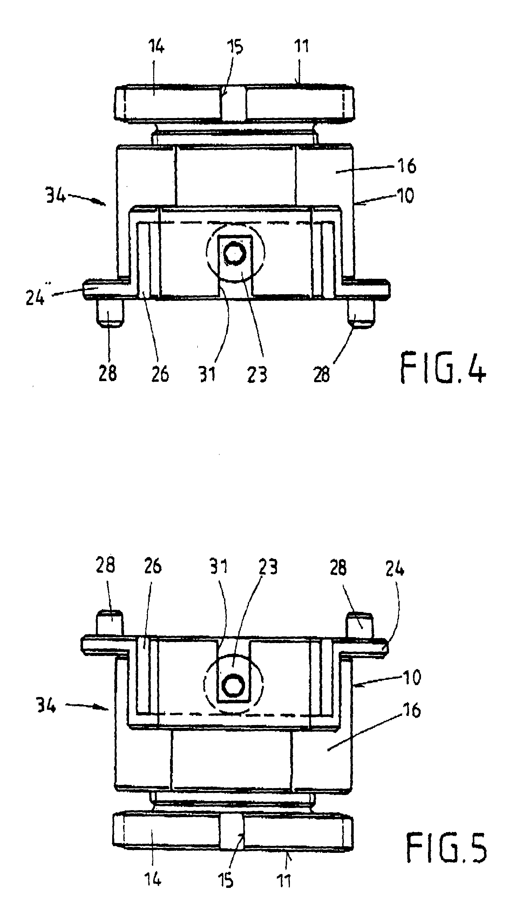

Während nun die aus den Fig. 1 bis 3 ersichtliche Einbaulage der Schraubeinheit 34 der in Fig. 4 ersichtlichen Einbaulage entspricht und sicherlich im Normalfall angewendet wird, könnte die Schraubeinheit 34 auch eine Einbaulage erhalten, wie sie aus der Fig. 5 ersichtlich ist Im letzteren Fall würden die Zentrierzapfen 28 in Bohrungen im Konsolbauteil 35 eingreifen, während das Distanzbauteil 29 dann Bohrungen für die Zentrierzapfen 28 nicht aufzuweisen braucht. Schließlich könnte auch die in Fig. 1 im Konsolbauteil 35 dargestellte Durchgangsbohrung 36 mit dem der Zentralbohrung 17 entsprechenden Durchmesser auch im Distanzbauteil 29 angeordnet sein, wenn dafür eine größere Bohrung im Konsolbauteil 35 vorgesehen wird.
- 10: Stützhülse
- 11: Schraubenzapfen
- 12: Außengewinde, an 11
- 13: Innengewinde, an 10
- 14: Stellkragen. von 11
- 15: Stellfläche, an 14 von 11
- 16: Stellfläche, an 10
- 17: Zentralbohrung, in 11
- 18: Ringkragen
- 19: Anschlagglied/Verstemmung
- 20: Abstufung
- 21: Aussparung
- 22: Gewindebohrung
- 23: Zylinderschraube
- 24: Schiebestützglied
- 25: Kopf, an 23
- 26: Nut
- 27: Brückenteil, an 24
- 28: Zentrierzapfen
- 29: Distanzbauteil
- 30: Langloch
- 31: Schlitz
- 32: Führungsschlitz
- 33: Führungsschraube
- 34: Schraubeinheit
- 35: Konsolbauteil
- 36: Durchgangsbohrung
- 37: Kopfschraube
- 38: Mutter
- 39: Unterlegscheibe

## Patentansprüche

1. Schraubeinheit (34) zur ein- und feststellbaren Überbrückung von Distanzen zwischen Bauteilen (29, 35), Konsolen, sowie zur Justierung von Aggregaten u. dgl., bestehend aus einem Stellflächen (15) aufweisenden Schraubenzapfen (11) mit einer zu einer Durchgangsbohrung (36) gehörenden Zentralbohrung (17) und einer auf den Schraubenzapfen (11) aufgedrehten, als Stützhülse (10) ausgebildeten Schraubenmutter mit einem den Schraubenzapfen (11) aufnehmenden Innengewinde (13), in welche der Schraubenzapfen (11) etwa bündig eindrehbar ist, und wobei die Stützhülse (10) an ihrem einem Stellkragen (14) des Schraubenzapfens (11) zugekehrten Ende mit einem nach innen vorspringenden, das Innengewinde (13) aufweisenden Ringkragen (18) versehen ist, während am freien Ende des Schraubenzapfens (11) ein Anschlagglied (19) als Ausdrehsicherung angeordnet ist, **dadurch gekennzeichnet, daß** die Stützhülse (10) unverlierbar an einem gegenüber einem (29) der Bauteile zentriert angeordneten Schiebestützglied (24) quer zur Längsachse der Schraubeinheit (34) zum Fluchtungsausgleich der Mitte der Durchgangsbohrung (36) in den Bauteilen (29, 35) und der Mitte der Schraubeinheit (34) mittels einer Schraube (23) verschiebbar festgelegt ist.

2. Schraubeinheit nach Anspruch 1, **dadurch gekennzeichnet, daß** der dem Innengewinde (13) gegenüberliegende Bohrungsbereich der Stützhülse (10) eine nach innen vorragende Abstufung (20) aufweist, deren lichter Durchmesser etwa mit der Zentralbohrung (17) des Schraubenzapfens (11) übereinstimmt, wobei die Abstufung (20) innenseitig wenigstens eine in axialer Richtung verlaufende Aussparung (21) zur Ausgestaltung des die Ausdrehsicherung bildenden Anschlaggliedes (19) aufweist.

3. Schraubeinheit nach Anspruch 1 oder 2, **dadurch gekennzeichnet, daß** das die Ausdrehsicherung bildende Anschlagglied (19) durch bereichsweise Verstemmung des äußeren Gewindeganges am Schraubenzapfen (11) gebildet ist.

4. Schraubeinheit nach einem der vorhergehenden Ansprüche, **dadurch gekennzeichnet, daß** die am Schiebestützglied (24) anliegende Stützhülse (10) eine in der Abstufung (20) quer zur Längsachse der Stützhülse (10) angeordnete Gewindebohrung (22) aufweist, in die eine als Zylidnerschraube ausgebildete Schraube (23) eingreift, deren Kopf (25) in einer Ausnehmung (26) des Schiebestützgliedes (24) drehbar aber in axialer Richtung unverrückbar gehaltert ist.

5. Schraubeinheit nach einem der vorhergehenden Ansprüche, **dadurch gekennzeichnet, daß** das Schiebestützglied (24) plattenförmig gestaltet ist und im mittleren Bereich ein sich mit seiner Hauptachse in Verschiebrichtung erstreckendes Langloch (30) aufweist, dessen Breite mit der Zentralbohrung (17) des Schraubenzapfens (11) übereinstimmt und dessen Länge um das Maß des Verschiebeweges länger als die Zentralbohrung des Schraubenzapfens (11) ist.

6. Schraubeinheit nach Anspruch 5, **dadurch gekennzeichnet, daß** das Schiebestützglied (24) mit wenigstens einem Zentrierzapfen (28) versehen ist, der aus der der Anlageseite für die Stützhülse (10) gegenüberliegenden Stützseite vorragt.

7. Schraubeinheit nach Anspruch 4, **dadurch gekennzeichnet, daß** das Schiebestützglied (24) plattenförmig gestaltet ist und auf einer Seite über die Anlagefläche der Stützhülse (10) hinausgeht und in diesem verlängerten Bereich einen aufragenden Brückenteil (27) ausweist, in welchem die den Kopf (25) der in die Gewindebohrung (22) der Stützhülse (10) eindrehbare Zylinderschraube (23) aufnehmende, quer zur Längsachse der Gewindebohrung (22) verlaufende Ausnehmung (26) angeordnet ist.

8. Schraubeinheit nach Anspruch 7, **dadurch gekennzeichnet, daß** das Schiebestützglied (24) auf der den Brückenteil (27) aufweisenden Seite einen sich vom Langloch (30) nach außen erstreckenden Schlitz (31) mit einer den Durchtritt des Schaftes der Zylinderschraube (23) ermöglichenden Breite aufweist.

9. Schraubeinheit nach Anspruch 8, **dadurch gekennzeichnet, daß** das Schiebestützglied (24) auf seiner dem Brückenteil (27) gegenüberliegenden Seite einen Führungsschlitz (32) aufweist, der fluchtend zur Längsachse der Zylinderschraube (23) angeordnet ist und den zylindrischen Kopf einer in die äußere Stirnseite der Abstufung (20) der Stützhülse (10) eingedrehten Führungsschraube (33) umfaßt.

## Claims

1. A screw unit (34) for the adjustable and lockable spanning of distances between structural components (29, 35), brackets, and for the adjustment of assemblies and the like, consisting of a threaded pin (11) comprising adjusting surfaces (15) and having a central bore (17), associated with a through-bore (36), and a nut, which is screwed onto the threaded pin (11), this nut taking the form of a support sleeve (10) with an internal thread (13) accommodating the threaded pin (11), into which the threaded pin (11) may be screwed until it is approximately flush, the support sleeve (10) being provided at its end facing an adjusting collar (14) of the threaded pin (11) with an inwardly projecting, annular collar (18) comprising the internal thread (13), while a stop element (19) is disposed at the free end of the threaded pin (11) as a safeguard against screwing out, **characterised in that** the support sleeve (10) is attached captively to a sliding support element (24) disposed in centred manner relative to one (29) of the structural components so as to be displaceable perpendicularly to the longitudinal axis of the screw unit (34) for alignment compensation of the centre of the through-bore (36) in the structural components (29, 35) and of the centre of the screw unit (34) by means of a screw (23).

2. A screw unit according to claim 1, **characterised in that** the bore area of the support sleeve (10) opposite the internal thread (13) has an inwardly projecting step (20), the internal diameter of which approximately matches the central bore (17) of the threaded pin (11), wherein, on the inside, the step (20) comprises at least one indentation (21) extending in the axial direction to allow the formation of the stop element (19) acting as the safeguard against screwing out.

3. A screw unit according to claim 1 or claim 2, **characterised in that** the stop element (19) acting as the safeguard against screwing out is formed by chisel-deformation of areas of the external thread on the threaded pin (11).

4. A screw unit according to one of the preceding claims, **characterised in that** the support sleeve (10) resting against the sliding support element (24) comprises a threaded hole (22) disposed in the step (20) perpendicular to the longitudinal axis of the support sleeve (10), in which threaded hole (22) there engages a screw (23) in the form of a cheese head screw, the head (25) of which is held in a recess (26) in the sliding support element (24) so that it may rotate but cannot move in the axial direction.

5. A screw unit according to one of the preceding claims, **characterised in that** the sliding support element (24) is plate-shaped and comprises in the central area an elongate hole (30) extending with its principal axis in the sliding direction, the width of which hole (30) matches the central bore (17) of the threaded pin (11) and the length of which is greater than the central bore of the threaded pin (11) by the distance of the displacement path.

6. A screw unit according to claim 5, **characterised in that** the sliding support element (24) is provided with at least one centring pin (28), which projects out of the support side opposite the bearing side for the support sleeve (10).

7. A screw unit according to claim 4, **characterised in that** the sliding support element (24) is plate-shaped and on one side extends beyond the bearing surface of the support sleeve (10) and comprises an upwardly projecting bridge member (27) in this extended area, in which bridge member (27) is disposed the recess (26) accommodating the head (25) of the cheese head screw (23) screwable into the threaded hole (22) in the support sleeve (10) and extending perpendicularly to the longitudinal axis of the threaded hole (22).

8. A screw unit according to claim 7, **characterised in that** the sliding support element (24) comprises a slot (31) extending outwards from the elongate hole (30) on the side comprising the bridge member (27), which slot (31) is of a width allowing passage of the shank of the cheese head screw (23).

9. A screw unit according to claim 8, **characterised in that** the sliding support element (24) comprises a guide slot (32) on its side opposite the bridge member (27), which guide slot (32) is disposed in alignment with the longitudinal axis of the cheese head screw (23) and encloses the cylindrical head of a guide screw (33) screwed into the outer end of the step (20) of the support sleeve (10).

## Revendications

1. Unité de visserie (34) pour le pontage réglable et bloqué de distance entre des parties de construction (29, 35), des consoles, ainsi que pour la justification d'agrégats et similaires, consistant en un tourillon de vis (11) présentant des surfaces de positionnement (15), le tourillon (11) ayant un alésage central (17) appartenant à un alésage traversant (36), et consistant en un écrou formé en douille de support et qui peut tourner sur le tourillon de vis (11), l'écrou ayant un filetage interne (13) venant en prise avec le tourillon de vis (11), le tourillon de vis (11) pouvant tourner à fleur dans le filetage interne, la douille de support (10) étant pourvue à son extrémité adjacente à un rebord de positionnement (14) du tourillon de vis (11) d'un rebord annulaire (18) présentant le filetage interne (13) et en saillie vers l'intérieur, tandis qu'à l'extrémité libre du tourillon de vis (11), un élément d'arrêt (19) est agencé en tant que sécurité contre le dévissage, **caractérisée en ce que** la douille de support (10) est fixée de manière imperdable sur un élément (24) de support de glissement agencé de manière centré en face de l'une (29) des parties de construction, et mobile perpendiculairement à l'axe longitudinal de l'unité de visserie (34) pour compenser l'alignement du milieu de l'alésage (36) débouchant dans les parties de construction (29, 35) et du milieu de l'unité (34) de visserie au moyen d'une vis (23).

2. Unité de visserie selon la revendication 1, **caractérisée en ce que** le domaine de l'alésage de la douille de support (10) située en face du filetage interne (13) présente une gradation (20) dépassant vers l'intérieur, dont le diamètre interne correspond environ avec l'alésage central (17) du tourillon de vis (11), la gradation (20) présentant du côté interne au moins un évidement (21) s'étendant dans la direction axiale pour l'engagement de l'élément d'arrêt (19) formant la sécurité contre le dévissage.

3. Unité de visserie selon la revendication 1 ou 2, **caractérisée en ce que** l'élément (19) d'arrêt formant la sécurité contre le dévissage est formé par un rabat local du pas de vis externe sur le tourillon de vis (11).

4. Unité de visserie selon l'une quelconque des revendications précédentes, **caractérisée en ce que** la douille de support (10) située sur l'élément de support de glissement (24) présente un alésage taraudé (22) pratiqué dans la gradation (20) perpendiculairement à l'axe longitudinal de la douille de support (10), une vis (23) en forme de vis à tête cylindrique s'engageant dans l'alésage taraudé (22), la tête (25) de la vis (23) étant maintenue dans un évidement (26) de l'élément de support de glissement (24) d'une manière permettant sa rotation mais pas son retrait dans une direction axiale.

5. Unité de visserie selon l'une quelconque des revendications précédentes, **caractérisée en ce que** l'élément de support de glissement (24) est formé d'une manière plate et présente en son centre un trou longitudinal (30) s'étendant avec son axe principal dans la direction de glissement, trou longitudinal dont la largeur concorde avec l'alésage central (17) du tourillon de vis (11) et dont la longueur le long du segment de glissement est plus grande que l'alésage central du tourillon de vis (11).

6. Unité de visserie selon la revendication 5, **caractérisée en ce que** l'élément de support de glissement (24) est prévu avec au moins un tenon de centrage (28), qui est en saillie hors de la partie de support située face à la partie de positionnement pour la douille de support (10).

7. Unité de visserie selon la revendication 4, **caractérisée en ce que** l'élément de support de glissement (24) est formé d'une manière plate et dépasse d'un côté sur la surface de positionnement de la douille de support (10) et présente dans ce domaine rallongé une partie de pontage (27) dépassant, dans laquelle est agencé l'évidement (26) s'étendant perpendiculairement à l'axe longitudinal de l'alésage taraudé (22) et renfermant la tête (25) de la vis à tête cylindrique (23) pouvant être vissée dans l'alésage taraudé (22) de la douille de support (10).

8. Unité de visserie selon la revendication 7, **caractérisée en ce que** l'élément de support de glissement (24) présente sur le côté présentant la partie de pontage (27), une rainure (31) s'étendant à partir du trou longitudinal (30) vers l'extérieur, la rainure ayant une largeur permettant le passage de la tige de la vis à tête cylindrique (23).

9. Unité de visserie selon la revendication 8, **caractérisé en ce que** l'élément de support de glissement (24) présente sur son côté situé à l'opposé de la partie de pontage (27), une rainure de guidage (32) qui est agencée dans l'alignement de l'axe longitudinal de la vis à tête cylindrique (23) et qui noie la tête cylindrique d'une vis de guidage (33) vissée dans la partie frontale externe de la gradation (20) de la douille de support (10).
